# EUROPEAN PATENT APPLICATION

(11) **EP 4 552 722 A1**
(43) Date of publication of application: **14.05.2025**
(21) Application number: 23208417.8
(22) Date of filing: 08.11.2023
(51) Int. Cl.: B01D 46/00, B01D 46/24, B01D 46/52, B01D 46/76, F16D 65/00

(54) **FILTER CARTRIDGE AND FILTER ARRANGEMENT**

(71) Applicant: MANN+HUMMEL GmbH, 71636 Ludwigsburg (DE)
(72) Inventor: KOHN, Kevin, 71636 Ludwigsburg (DE); KELLER, Florian, 71636 Ludwigsburg (DE); EPLI, Sven, 71636 Ludwigsburg (DE); PFANNKUCH, Steffen, 71636 Ludwigsburg (DE)
(74) Representative: Mann + Hummel Intellectual Property

(57) **Abstract**

A filter cartridge (2) includes a filter cartridge cover (5) including a filter cartridge installation opening (15), a filter cartridge housing (9) on which the filter cartridge cover (5) is disposed, a filter medium (8) disposed inside the filter cartridge housing (9), and a stripper device (10) disposed inside the filter cartridge housing (9). The stripper device (10) includes a stripper shaft (11) having an axis coinciding with a longitudinal axis of the filter cartridge (2), and stripper elements (12) extending from the stripper shaft (11) and configured to engage with the filter medium (8) to cast off dust particles that are accumulated on the filter medium (8).

## Description

### TECHNICAL FIELD

The invention relates to a filter arrangement, particularly a brake dust particle filter arrangement, including a filter cartridge having a filter cartridge cover with a filter cartridge installation opening and a filter medium.

### BACKGROUND ART

The invention will thus be described in conjunction with a brake dust particle filter arrangement. However, the invention should not be construed as being limited to said field of application.

Brake dust particles are commonly produced upon actuation of a brake assembly. Typically, brake abrasion due to friction between a brake pad and a brake disc of the brake assembly results in the production of said brake dust particles. The brake dust particles constitute a (fine) dust load in the ambient air of the brake assembly. Such (fine) dust load of the ambient air is harmful to humans and nature. It should therefore not escape into the environment.

To this end, the filter arrangement is provided. It includes a filter cartridge. The filter cartridge is arranged to clean the ambient air of the brake assembly from its (fine) dust load. In order to achieve this, the filter cartridge is installed at its operation site, e.g. the brake assembly. During this installation the filter cartridge installation opening engages with an appropriate counterpart in the brake assembly. This serves to securely fasten the filter assembly at its operation site. The polluted air containing the (fine) dust load is then guided into the air inlet which is provided at the filter cartridge. The polluted air passes through the filter medium within the filter cartridge. The (fine) dust particles are separated from the polluted air into the filter medium. The clean air then passes to the air outlet. There the clean air leaves the filter cartridge.

The filter medium is preferably provided in the form of a filter paper, a filter fabric, filter scrim or filter fleece. In particular, the filter medium can be produced in a spunbonded or meltblown process or include such a fibre layer applied to a non-woven or cellulose carrier with nanofiber coating. Furthermore, the filter medium may be felted or needled. The filter medium may have natural fibres, such as cellulose or cotton, or synthetic fibres, for example polyester, polyvinylsulfit or polytetrafluoroethylene. The filter medium is preferably folded.

Exemplary brake assemblies in which the said filter arrangement can be used may include both mobile and stationary applications. Mobile applications include, for example, passenger or goods vehicles and rail vehicles. Stationary applications include, for example, shaft brake assemblies such as those used in wind turbines. Both mobile and stationary applications have in common that the available installation space for the filter arrangement within them is typically restricted. Therefore, the above-described installation of the filter arrangement at its operation site can be cumbersome for service personnel. In particular any connection of the air inlet and air outlet of the filter arrangement with their corresponding ports within the brake assembly can prove to be difficult.

What is more, each filter arrangement needs to be replaced or subjected to maintenance after a certain service interval. During this replacement or maintenance the filter arrangement must be uninstalled and removed from its operation site at the brake assembly. However, this de-installation can be as cumbersome as the preceding installation due to restricted installation space. As a result, the service personnel might not always be able to handle the filter arrangement with due care. This can cause the filter arrangement to move in such a way that (fine) dust particles previously accumulated in it can escape from it again. A health hazard for the service personnel might thus occur.

### SUMMARY

It is therefore an objective of the invention to provide a filter arrangement which can achieve a long service interval within a small installation space.

It is also an objective of the invention to provide a filter arrangement which securely stores harmful (fine) dust particles.

These objectives are achieved in that the filter arrangement includes a coupling element which is arranged to be coupled with the filter cartridge installation opening and accommodates an air outlet duct and an air outlet.

The coupling element provides a simple design feature which facilitates installation of the filter arrangement at its operation site. The service personnel need only engage the coupling element with the filter cartridge installation opening in order to operationally install the filter arrangement. The coupling element can be pre-installed or fixedly mounted at the operation site, e.g. the brake assembly. The engagement between the coupling element and the filter cartridge installation opening can be achieved by means of a threaded connection. Alternatively, a bayonet fixation or a click-in fixation between the coupling element and the filter cartridge installation opening can be provided. Other means of fastening known in the art are also possible.

The coupling element includes the air outlet duct and the air outlet. The clean air leaving the filter arrangement is thus guided through the coupling element. Any additional construction elements pertaining to the air flow through the filter arrangement are rendered unnecessary. The filter arrangement can be provided in a compact manner which is suitable to reduce the need for installation space. An additional advantage results from the provision of the air outlet duct within the coupling element. The service personnel now need not see to establishing an additional connection between brake assembly components and corresponding counterparts of the filter arrangement in order to generate air flow through the filter arrangement. As a result, the filter arrangement need not be excessively twisted and turned during installation/de-installation as might otherwise be the case. As excessive movement of the filter arrangement can thus be avoided, the likelihood of harmful (fine) dust particles escaping from the filter arrangement during maintenance or replacement can be minimised.

Further advantageous embodiments of the invention are provided in the dependent claims.

In one embodiment the air outlet duct passes through the coupling element and continues through the filter cartridge installation opening to an inside of the filter cartridge.

The flow of clean air from the filter cartridge through the air outlet duct and finally to the ambient air can thus be provided in a constructionally simple manner. The already present filter cartridge installation opening can be employed for the purpose of guiding clean air through the filter cartridge cover and the air outlet. No additional constructional parts are needed. The coupling element provides the necessary air outlet duct.

In another embodiment the coupling element includes an accommodation chamber arranged to accommodate a stripper shaft of a stripper device provided within the filter cartridge.

The stripper device (which may also be called a scraper device or wiper device) is employed to clean the filter medium from accumulated (fine) dust particles. To this end, the stripper device includes a stripper shaft. The stripper shaft is arranged to rotate around a stripper shaft axis. The stripper shaft axis may be arranged in parallel to a longitudinal axis of the filter medium. One or more stripper elements are disposed on the stripper shaft. The stripper elements may extend perpendicular to or at an angle with respect to the stripper shaft axis. The stripper elements engage with the filter medium. The filter medium can be folded (pleated), for example. In this case, each stripper element engages with one or more fold(s) of the filter medium. Alternatively, each stripper element can engage with two or more folds disposed at opposite sides of the filter medium. Also alternatively, each stripper element can engage with any number of folds. Said engagement depends on the constructional features of the stripper elements. In any event, during operation the stripper shaft of the stripper device is set in rotation. The co-rotating stripper elements then deform the fold(s) of the filter medium they engage with. After the stripper elements have rotated through a pre-determined angle, they disengage with the respective fold(s) of the filter medium. The fold(s) are now free to relax into their un-deformed state. This relaxation causes an oscillatory motion of the respective fold(s). As a result, the (fine) dust particles accumulated on the respective fold(s) are cast off. The filter medium is cleaned. The cast-off (fine) dust particles accumulate within the filter cartridge. At the same time the cleaned filter medium can receive additional (fine) dust particles.

The coupling element provides sufficient space for accommodating the stripper shaft of the stripper device. Therefore, no additional installation space must be provided for the stripper device. It can seamlessly be included in the filter arrangement. This in turn allows longer service intervals at a smaller installation space for the filter arrangement. The (fine) dust particles need less volume and do not generate any pressure increase when stored in the filter cartridge.

In another embodiment the coupling element includes a portion of an air inlet duct and an air inlet that are fluidically separated from the air outlet duct.

The air inlet duct is therefore integrated in the coupling element and the filter cartridge. The polluted air containing the (fine) dust particles flows into the filter cartridge via the air inlet and the air inlet duct of the coupling element and the filter cartridge. Put another way, any additional construction elements pertaining to the air flow through the filter arrangement are rendered unnecessary. The filter arrangement can be provided in a compact manner which is suitable to reduce the need for installation space. An additional advantage results from the provision of the air inlet duct within the coupling element. The service personnel now need not see to establishing an additional connection between brake assembly components and corresponding counterparts of the filter arrangement in order to generate air flow through the filter arrangement. As a result, the filter arrangement need not be excessively twisted and turned during installation/de-installation as might otherwise be the case. As excessive movement of the filter arrangement can thus be avoided, the likelihood of harmful (fine) dust particles escaping from the filter arrangement during maintenance or replacement can be minimised. The air inlet duct is fluidically separated from the air outlet duct. Therefore, polluted air containing (fine) dust particles can be reliably separated from clean air exiting the filter cartridge. At the same time both the air inlet duct as well as the air outlet duct are provided within the coupling element.

In another embodiment it is provided that the air inlet duct passes through the coupling element and continues at an outer perimeter of the inside of the filter cartridge adjacent to the filter medium.

In this way a seamless and simple air flow path through the coupling element and the filter cartridge is provided. The coupling element takes advantage of the already existing features of the filter arrangement. The air inlet duct is constructed in such a way that it connects in a fluid-tight manner with the inside of the filter cartridge. The polluted air containing (fine) dust particles is guided through the air inlet and the air inlet duct in the coupling element. The air inlet duct continues into the filter cartridge. The air inlet duct is disposed inside the filter cartridge in such way that the polluted air containing the (fine) dust particles is directly led onto the filter medium. To this end, the air inlet duct is at least partially arranged on a side of the filter medium facing away from the stripper device. The air inlet duct may at least in sections be arranged parallel to the longitudinal axis of the filter medium. The air inlet duct may include a section running perpendicular to the longitudinal axis of the filter medium. The air inlet duct may extend over the entire longitudinal extension of the filter medium. As the air inlet duct is disposed at an outer perimeter of the inside of the filter cartridge, the filter arrangement can be provided in a compact manner. Further installation space can be saved.

In another embodiment the coupling element includes a guiding structure arranged to guide air passing through air inlet duct of the coupling element to the outer perimeter of the inside of the filter cartridge adjacent to the filter medium.

The guiding structure serves a dual purpose. On the one hand, the guiding structure is arranged to provide an as smooth and low-turbulence air flow within the coupling element as possible. On the other hand, the guiding structure can also be employed to establish the fluidic separation between the air inlet duct and the outlet duct. To this end, the guiding structure fluidically seals the air inlet duct against the filter cartridge installation opening. As the air outlet duct runs through the filter cartridge installation opening, fluidic separation between the air inlet duct and the air outlet duct is achieved. The guiding structure may extend in a manner substantially parallel to the longitudinal axis of the coupling element. The guiding structure may be equipped with a threaded portion at one (or both) its distal end(s). The threaded portion can be arranged to engage the coupling element with the filter cartridge cover.

In an alternative embodiment the air inlet is arranged at the filter cartridge adjacent to the filter medium.

In this embodiment the air inlet is not part of the coupling element. Instead the air inlet and the air inlet duct are provided by means of a through-hole in a filter cartridge housing. Hence, the air inlet is arranged on a side of the filter medium facing away from the stripper device. The air inlet may include an air inlet spigot. The air inlet spigot can be connected to an appropriate counterpart on the brake assembly in order to receive polluted air containing (fine) dust particles. This embodiment presents a constructional trade-off. On the one hand, the air inlet (or air inlet spigot) now represents an additional constructional feature which needs to be installed at the appropriate location within the bake assembly connecting to its counterpart. This makes installation of the filter arrangement a bit more cumbersome than with other embodiments of the present invention. However, on the other hand, providing the air inlet at the filter cartridge also comes with an advantage. It allows to increase the diameter of the air inlet. It simultaneously allows to increase the diameter of the filter cartridge installation opening and thereby the diameter of the air outlet. As a consequence a larger flow cross-section for the air passing through the filter cartridge results. This may improve the pressure conditions inside the filter cartridge and avoid pressure losses.

In another embodiment the coupling element is arranged to be coupled to a stripper shaft driving unit which is provided to drive a rotary motion of the stripper shaft of the stripper device.

The coupling element serves a dual purpose in this embodiment. On the on hand, the coupling element is arranged at the filter cartridge as described above in detail. On the other hand, the coupling element can also be arranged at the stripper shaft driving unit of the stripper device. Upon installation of the filter arrangement the coupling element is then simply engaged with the stripper shaft driving unit. The stripper shaft of the stripper device engages with the stripper shaft driving unit, e.g. via a joint, welding, a threaded connection or otherwise, and is thus operationally installed. The stripper shaft driving unit provides the rotary motion to the stripper shaft. Hence, the rotary motion is translated to the stripper device with its stripper elements. When a replacement of the filter arrangement is needed, the stripper shaft of the stripper element is simply disengaged from the stripper shaft driving unit again. The filter arrangement containing the stripper device with the stripper shaft can then discarded and replaced or subjected to maintenance. At the same time, the stripper shaft driving unit remains installed and need not be discarded along with the filter arrangement. The stripper shaft driving unit may include an electrically driven motor. Alternatively or additionally, it may include a vane wheel driven by the flow of air through the filter arrangement.

Finally, in one embodiment a dust chamber is disposed at a filter cartridge base of the filter cartridge opposite the filter cartridge cover.

In this way any (fine) dust particles scraped off the filter medium can be gathered and safely stored within the dust chamber. As the dust chamber is disposed opposite the air inlet duct and the air outlet duct passing through the filter cartridge installation opening the risk of contaminating cleaned air with cast-off (fine) dust particles is minimised. Moreover, the dust chamber provides a secure confinement for the (fine) dust particles. Hence, said (fine) dust particles will not easily escape the filter arrangement. This holds true even if the service personnel do not handle the filter arrangement with due care. Health hazards for the service personnel can be further reduced.

### BRIEF DESCRIPTION OF THE DRAWINGS

Further advantages can be seen in the following description of the drawings. The drawings show examples of embodiments of the invention. The drawings, description and claims contain numerous features in combination. The person skilled in the art will expediently consider the features individually and combine them to form further useful combinations. Exemplary embodiments are:
- Figure 1: a sectional view of a first embodiment of the present invention;
- Figure 2: a sectional view of a second embodiment of the present invention; and
- Figure 3: a side view of the second embodiment of the present invention.

### DETAILED DESCRIPTION

The figures only show examples and are not to be understood as limiting.

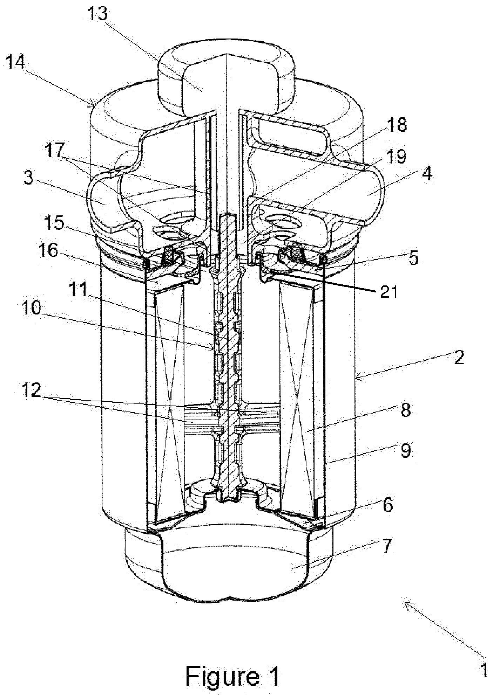

Figure 1 shows a first embodiment with filter arrangement 1. The filter arrangement 1 includes a filter cartridge 2. The filter cartridge 2 has a filter cartridge cover 5 and a filter cartridge base 6 which is arranged at an opposite side of the filter cartridge 2. A dust chamber 7 is arranged adjacent to the filter cartridge base 6. The filter cartridge 2 furthermore includes a filter medium 8 which is arranged inside a filter cartridge housing 9.

The filter medium 8 can be folded (or pleated). It then includes a plurality of folds. Figure 1 additionally shows a stripper device 10. The stripper device 10 is arranged within the filter cartridge 2. The stripper device 10 includes a stripper shaft 11 with an axis which in this embodiment coincides with the central/longitudinal axis of the filter cartridge 2. A plurality of stripper elements 12 is disposed on or extending from the stripper shaft 11. The stripper elements 12 extend perpendicular to or at an angle with respect to the longitudinal axis of the filter cartridge 2. In the present embodiment two stripper elements 12 are shown. However, any suitable number of stripper elements 12 is possible. In the embodiment shown, the stripper elements 12 are shown aligned with each other. Alternatively, the stripper elements 12 may be laterally displaced from one another along the stripper shaft 11. The stripper shaft 11 engages with a stripper shaft driving unit 13. The stripper shaft driving unit 13 is arranged to drive a rotary motion of the stripper shaft 11 of the stripper device 10.

The filter arrangement 1 further includes a coupling element 14 with an air inlet 3 and an air outlet 4. The coupling element 14 is shown in engagement with a filter cartridge installation opening 15 located at the filter cartridge cover 5. The coupling element 14 is also shown in engagement with the stripper shaft driving unit 13.

The filter arrangement 1 is used to filter (fine) dust particles out of an air flow which passes through the filter arrangement 1. To this end, an air inlet duct 16 is connected to the air inlet 3. The air inlet 3 and a portion of the air inlet duct 16 are disposed within the coupling element 14. The air inlet duct 16 passes through the coupling element 14 (e.g., out of openings in a bottom surface of the coupling element 14), into the filter cartridge 2 (e.g., through openings in the filter cartridge cover 5) and through the filter cartridge 2. In order to direct the flow of polluted air containing (fine) dust particles through the coupling element 14 a guiding structure 17 is provided.

The guiding structure 17 serves a dual purpose. On the one hand, it establishes a smooth and low-turbulence flow of air through the air inlet duct 16 inside the coupling element 14. On the other hand, it also seals the air inlet duct 16 against the adjacent filter cartridge installation opening 15. The guiding structure 17 also serves to engage the coupling element 14 with the filter cartridge installation opening 15. To this end, a threaded portion is arranged at the distal end of the guiding structure 17 facing toward the filter cartridge installation opening 15. The threaded portion engages with a respective threaded counterpart provided on the filter cartridge cover 5. The guiding structure 17 engages with the filter cartridge cover 5, e.g. in a threaded manner or via a threaded connection. However, other means of establishing said engagement are possible, e.g. welding, a click-in fixation or a bayonet fixation.

The air inlet duct 16 continues through the coupling element 14 and into the filter cartridge 2 at an outer perimeter of the inside of the filter cartridge 2 adjacent to the filter medium 8. The air inlet duct 16 includes a section extending perpendicular to the longitudinal direction of the filter medium 8. The air inlet duct 16 includes a section extending in parallel to the longitudinal direction of the filter medium 8. The air inlet duct 16 extends over the entire longitudinal extension of the filter medium 8. Hence, the polluted air laden with (fine) dust particles passes through the filter medium 8. There, the (fine) dust particles are separated onto the filter medium 8. The (fine) dust particles accumulate in the filter medium 8.

In order to increase the service period of the entire filter arrangement 1, the stripper device 10 can be employed. Upon actuation of the stripper device 10 the stripper shaft 11 is set in rotation. This causes a rotary motion of the stripper elements 12. Each stripper element 12 engages with at least one fold of the filter medium 8. The stripper elements 12 hence tug the respective fold of the filter medium 8. An oscillation of the fold of the filter medium 8 occurs as the stripper element 12 lets go of the respective fold and the latter snaps back into its resting position. The oscillatory movement of the fold causes the (fine) dust particles accumulated on the respective fold to be cast off. The cast-off (fine) dust particles fall to the ground of the filter cartridge housing 9 where they are collected and stored inside the dust chamber 7.

After the (fine) dust particles have been filtered out of the polluted air, the then cleaned air continues to flow through the filter cartridge 2. To this end, an air outlet duct 18 is provided. The air outlet duct 18 passes through the filter cartridge installation opening 15. It enters the coupling element 14 via an accommodation chamber 19. The accommodation chamber 19 is provided to accommodate the stripper shaft 11 inside the coupling element 14 and protruding from the filter cartridge installation opening 15. The air outlet duct 18 continues to pass through the coupling element 14. The cleaned air can thus exit the filter arrangement 1 via the air outlet 4 which is connected to the air outlet duct 18.

Both the air inlet duct 16 and the air outlet duct 18 are therefore integrated in the coupling element 14. The polluted air containing the (fine) dust particles flows into the filter cartridge 2 via the air inlet 3 and the air inlet duct 16. It exits the filter cartridge via the air outlet duct 18 and the air outlet 4. Put another way, any additional construction elements pertaining to the air flow through the filter arrangement 1 other than the coupling element 14 are rendered unnecessary. The filter arrangement 1 can be provided in a compact manner which is suitable to reduce the need for installation space.

An additional advantage results from the provision of the air inlet duct 16 and the air outlet duct 18 within the coupling element 14. The service personnel need not see to establishing an additional connection between any components external to the filter arrangement 1 and corresponding counterparts of the filter arrangement 1 in order to generate air flow through the filter arrangement 1. As a result, the filter arrangement 1 need not be excessively twisted and turned during installation/de-installation as might otherwise be the case. As excessive movement of the filter arrangement 1 can thus be avoided, the likelihood of harmful (fine) dust particles escaping from the filter arrangement 1 during maintenance or replacement can be minimised. This is also achieved by provision of the dust chamber 7.

The air inlet duct 16 is fluidically separated from the air outlet duct 18. Therefore, polluted air containing (fine) dust particles can be reliably separated from clean air exiting the filter cartridge 2 while at the same time both the air inlet duct 16 as well as the air outlet duct 18 are provided within the coupling element 14.

The filter cartridge 2 further includes a sealing lip 21 surrounding and extending radially outward from inside the filter cartridge installation opening 15. The sealing lip 21 further extends under the filter cartridge cover 5 and is configured to, when the filter cartridge 2 is uninstalled or removed from the coupling element 14 for servicing of the filter cartridge 2, seal the filter cartridge 2 so that the (fine) dust particles do not exit the filter cartridge 2. The sealing lip 21 may seal the filter cartridge 2 by elastically moving to and contacting a bottom surface of the filter cartridge cover 5 when the filter cartridge 2 is uninstalled from the coupling element 14. The sealing lip 21 is further configured to, when the filter cartridge 2 is installed with the coupling element 14, allow the air to flow through the air inlet duct 16 from the coupling element 14 into the filter cartridge 2. The sealing lip 21 may allow the air to flow through the air inlet duct 16 by including a material that elastically bends away and disengages from the bottom surface of the filter cartridge cover 5 when the filter cartridge 2 is installed with the coupling element 14 via the threaded connection. The air may cause the sealing lip 21 to elastically bend away from the bottom surface of the filter cartridge cover 5. Alternatively, the coupling element 14 may include an extension (not shown) configured to cause the sealing lip 21 to elastically bend away from the bottom surface of the filter cartridge cover 5, when the filter cartridge 2 is installed with the coupling element 14 via the click-in fixation or the bayonet fixation. In embodiments, the sealing lip 21 may be made of rubber.

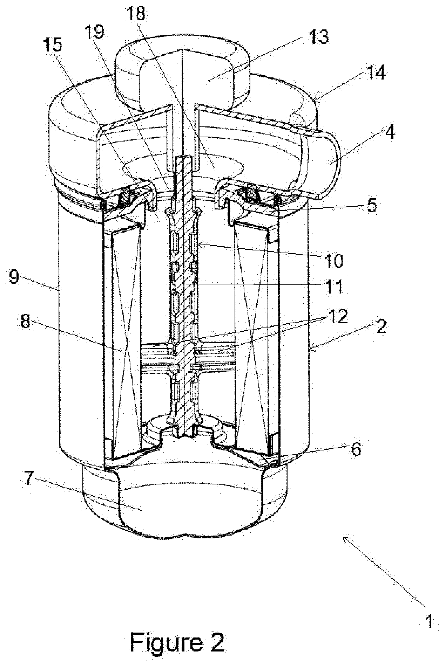

Figure 2 shows a second embodiment of the present invention in a sectional view.

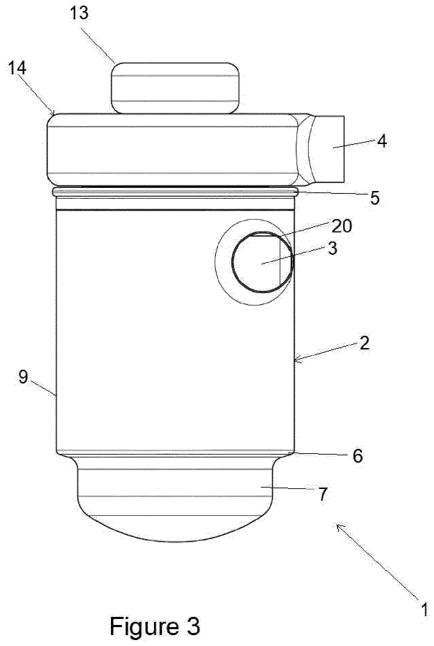

Figure 3 shows the second embodiment in a side view.

Simultaneous reference is now made to figures 2 and 3. Reference signs identical to the first embodiment of figure 1 denote identical features in the second embodiment of figures 2 and 3. The following description only exemplifies the differences between the first embodiment and the second embodiment. The description relating to the first embodiment also applies to the second embodiment in case no difference between the two is discussed.

In the second embodiment of figures 2 and 3 the air inlet 3 is arranged at the filter cartridge 2 adjacent to the filter medium 8. The air inlet 3 is therefore not part of the coupling element 14 in this second embodiment. Instead the air inlet duct 16 of the air inlet 3 is provided by means of a through-hole in the filter cartridge housing 9. The air inlet 3 may include an air inlet spigot 20. The air inlet spigot 20 can be connected to an appropriate counterpart external to the filter arrangement 1 in order to receive polluted air containing (fine) dust particles.

Providing the air inlet 3 at the filter cartridge 2 comes with an advantage. It allows to increase the diameter of the air inlet 3. It simultaneously allows to increase the diameter of the filter cartridge installation opening 15 and thereby the diameter of the air outlet 4. As a consequence a larger flow cross-section for the air passing through the filter cartridge 2 results. This may improve the pressure conditions inside the filter cartridge 2 and avoid pressure losses.

The coupling element 14 of both the first and the second embodiment provides a simple design feature which facilitates installation of the filter arrangement 1 at its operation site. Said operation site can be a brake assembly (not shown). In this case the filter arrangement 1 can be arranged as a brake dust particle filter arrangement. The service personnel need then only engage the coupling element 14 with the filter cartridge installation opening 15 in order to operationally install the filter arrangement 1 at the brake assembly.

The coupling element 14 can be pre-installed or fixedly mounted at the operation site or the brake assembly. The engagement between the coupling element 14 and the filter cartridge installation opening 15 can be achieved by means of a threaded connection. Alternatively, a bayonet or a click-in fixation between the coupling element 14 and the filter cartridge installation opening 15 can be provided. The latter alternative is especially preferred for the second embodiment. Other means of fastening known in the art are also possible.

### REFERENCE SIGNS LIST

- 1: filter arrangement
- 2: filter cartridge
- 3: air inlet
- 4: air outlet
- 5: filter cartridge cover
- 6: filter cartridge base
- 7: dust chamber
- 8: filter medium
- 9: filter cartridge housing
- 10: stripper device
- 11: stripper shaft
- 12: stripper element
- 13: stripper shaft driving unit
- 14: coupling element
- 15: filter cartridge installation opening
- 16: air inlet duct
- 17: guiding structure
- 18: air outlet duct
- 19: accommodation chamber
- 20: air inlet spigot
- 21: sealing lip

## Claims

1. A filter cartridge (2) comprising:
a filter cartridge cover (5) comprising a filter cartridge installation opening (15);
a filter cartridge housing (9) on which the filter cartridge cover (5) is disposed;
a filter medium (8) disposed inside the filter cartridge housing (9);
a stripper device (10) disposed inside the filter cartridge housing (9), and comprising:
a stripper shaft (11) having an axis coinciding with a longitudinal axis of the filter cartridge (2); and
stripper elements (12) extending from the stripper shaft (11) and configured to engage with the filter medium (8) to cast off dust particles that are accumulated on the filter medium (8).

2. The filter cartridge (2) according to claim 1, further comprising:
a filter cartridge base (6) on which the filter cartridge housing (9) is disposed; and
a dust chamber (7) disposed adjacent to the filter cartridge base (6) and configured to collect and store the dust particles casted off by the stripper elements (12).

3. The filter cartridge (2) according to claim 1, further comprising a sealing lip (21) surrounding and extending radially outward from inside the filter cartridge installation opening (15), the sealing lip (21) further extending under the filter cartridge cover (5) and being configured to, when the filter cartridge (2) is uninstalled, seal the filter cartridge (2) so that the dust particles do not exit the filter cartridge (2).

4. A filter arrangement (1) comprising:
the filter cartridge (2) according to one of claims 1 to 3; and
a coupling element (14) configured to be coupled to the filter cartridge installation opening (15), and to be engaged with a stripper shaft driving unit (13), the coupling element (14) comprising an air inlet (3) and an air outlet (4).

5. The filter arrangement (1) according to claim 4, wherein the coupling element (14) further comprises a first portion of an air outlet duct (18) connected to the air outlet (4) and passing through the coupling element (14),
wherein the filter cartridge (2) further comprises a second portion of the air outlet duct (18) continuing through the filter cartridge installation opening (15) to an inside of the filter cartridge (2).

6. The filter arrangement (1) according to claim 5, wherein the coupling element (14) further comprises a first portion of an air inlet duct (16) connected to the air inlet (3) and passing through the coupling element (14), the air inlet duct (16) being fluidically separated from the air outlet duct (18).

7. The filter arrangement (1) according to claim 6, wherein the filter cartridge (2) further comprises a second portion of the air inlet duct (16) continuing at an outer perimeter of the inside of the filter cartridge (2) adjacent to the filter medium (8).

8. The filter arrangement (1) according to claim 7, wherein the coupling element (14) further comprises a guiding structure (17) configured to guide air passing through the first portion of the air inlet duct (16) to the second portion of the air inlet duct (16).

9. The filter arrangement (1) according to one of claims 4 to 8, wherein the coupling element (14) further comprises an accommodation chamber (19) configured to accommodate the stripper shaft (11) protruding from the filter cartridge installation opening (15).

10. The filter arrangement (1) according to one of claims 4 to 9, wherein the stripper shaft driving unit (13) is configured to drive a rotary motion of the stripper shaft (11) protruding from the filter cartridge installation opening (15).

11. The filter arrangement (1) according to one of claims 4 to 10, wherein the coupling element (14) is configured to be coupled to the filter cartridge installation opening (15) by one among a threaded connection, a bayonet fixation and click-in fixation.

12. The filter arrangement (1) according to one of claims 4 to 11, wherein the sealing lip (21) is further configured to, when the filter cartridge (2) is installed with the coupling element (14), allow air to flow from the coupling element (14) into the filter cartridge (2).

13. The filter arrangement (1) according to one of claims 4 to 11, wherein the coupling element (14) further comprises an extension configured to cause the sealing lip (21) to elastically bend away from a bottom surface of the filter cartridge cover (5), when the filter cartridge (2) is installed with the coupling element (14).

14. A filter arrangement (1) comprising:
the filter cartridge (2) according to one of claims 1 to 3, the filter cartridge (2) comprising an air inlet (3) adjacent to the filter medium (8) and through the filter cartridge housing (9); and
a coupling element (14) configured to be coupled to the filter cartridge installation opening (15), and to be engaged with a stripper shaft driving unit (13), the coupling element (14) comprising an air outlet (4).

15. The filter arrangement (1) according to claim 14, wherein the air inlet (3) comprises an air inlet spigot (20).
